Europäisches Patentamt

European Patent Office

Office européen des brevets

(11) Numéro de publication: **0 284 480 B1**

# FASCICULE DE BREVET EUROPEEN

(45) Date de publication de fascicule du brevet: **22.07.92**

(51) Int. Cl.5: **H04N 3/12**, G09G 3/28, H01J 17/49

(21) Numéro de dépôt: **88400536.4**

(22) Date de dépôt: **08.03.88**

(54) **Procédé de réglage des couleurs d'un panneau à plasma polychrome et panneau à plasma utilisant un tel procédé.**

(30) Priorité: **13.03.87 FR 8703456**

(43) Date de publication de la demande:
**28.09.88 Bulletin 88/39**

(45) Mention de la délivrance du brevet:
**22.07.92 Bulletin 92/30**

(84) Etats contractants désignés:
**DE FR GB NL**

(56) Documents cités:
**EP-A- 0 054 618**
**GB-A- 2 094 052**

**IEEE TRANSACTIONS ON ELECTRON DEVI-CES, vol. ED-25, no. 1, janvier 1978, pages 8-16, IEEE, New York, US; Y. OKAMOTO et al.: "A new DC gas-discharge panel with internal memory for color television display"**

**IEEE Transactions on Electronic Devices, Vol. 36, No.6, June 1989, H. Murakami et al.: " A20- in Color DC Gas-Discharge Panel for TV Display", pages 1063-1071**

(73) Titulaire: **THOMSON-CSF**
**51, Esplanade du Général de Gaulle**
**F-92800 Puteaux(FR)**

(72) Inventeur: **Gay, Michel**
**THOMSON-CSF SCPI 19, avenue de Messine**
**F-75008 Paris(FR)**
Inventeur: **Deschamps Jacques**
**THOMSON-CSF SCPI 19, avenue de Messine**
**F-75008 Paris(FR)**

(74) Mandataire: **Guérin, Michel et al**
**THOMSON-CSF SCPI**
**F-92045 PARIS LA DEFENSE CEDEX 67(FR)**

Rank Xerox (UK) Business Services

## Description

La présente invention concerne un procédé de réglage des couleurs d'un panneau à plasma polychrome. Elle concerne aussi les panneau à plasma polychromes utilisant un tel procédé.

Les panneaux à plasma sont bien connus de l'art antérieur. Actuellement, les panneaux à plasma qui sont commercialisés sont tous monochromes, c'est-à-dire qu'ils émettent de la lumière d'une seule couleur, qui est habituellement du rouge-orangé.

Des études sont menées dans de nombreux laboratoires de recherche pour mettre au point des panneaux polychromes.

Pour réaliser des panneaux polychromes, il est connu de disposer à l'intérieur de chaque panneau des luminophores de différentes couleurs. Chaque point élémentaire d'image du panneau est alors constitué par la juxtaposition de plusieurs zones de faibles dimensions recouvertes de luminophores de différentes couleurs et chacune de ces zones correspond au croisement d'électrodes recevant des signaux de commande.

L'affichage d'informations sur un panneau à plasma se fait par création de décharges luminescentes au sein d'un gaz, contenu dans l'espace compris entre deux dalles de verre portant les électrodes du panneau. Les rayons ultraviolets émis lors des décharges excitent les zones recouvertes de luminophores. Les luminophores émettent alors par photoluminescence une lumière visible dont la couleur est déterminée par la nature du luminophore. On utilise généralement deux ou trois luminophores de couleurs différentes, ce qui permet d'obtenir respectivement une ou quatre couleurs supplémentaires. Ainsi, par exemple, dans le cas d'un panneau dont chaque point élémentaire d'image comporte trois zones recouvertes de trois luminophores différents, respectivement de couleurs rouge, verte et bleue, il est possible d'obtenir, en outre, du jaune par combinaison de la lumière émise par les luminophores rouge et vert, du cyan par combinaison de vert et de bleu, du magenta, par combinaison de rouge et de bleu et du blanc par combinaison de rouge, de vert et de bleu.

Un problème se pose dans les panneaux à plasma polychromes qui est celui de l'équilibrage des couleurs de base, c'est-à-dire des couleurs provenant d'un seul luminophore, de façon à obtenir exactement les nuances de couleur souhaitées lorsqu'on combine plusieurs de ces couleurs de base en excitant simultanément plusieurs luminophores.

Actuellement, le réglage des couleurs d'un panneau est assuré, en fonction des caractéristiques lumineuses et colorimétriques de chacun des luminophores utilisés, par la géométrie des zones recouvertes de luminophores et par leur nombre à l'intérieur de chaque point élémentaire d'image.

Les possibilités d'équilibrage des couleurs sont donc assez limitées car la géométrie des zones recouvertes de luminophores ne peut être modifiée dans de grandes proportions et le nombre total de zones recouvertes de luminophores par point élémentaire d'image ne peut pas devenir trop important : ainsi, lorsqu'on utilise trois luminophores de couleurs différentes, chaque point élémentaire d'image ne peut raisonnablement comporter plus de trois ou quatre zones.

De plus, ces possibilités d'équilibrage ne peuvent être utilisées pour remédier aux différences constatées expérimentalement d'un panneau à l'autre, car elles ne peuvent intervenir qu'au cours de la fabrication des panneaux.

On peut aussi citer un panneau à plasma décrit dans une Demande de Brevet Européen publiée avec le n° 0 054 618, panneau dans lequel on combine la lumière provenant des luminophores à celle provenant directement des décharges dans le gaz. Il est proposé en outre de modifier la couleur résultante en modifiant la fréquence de la tension d'entretien appliquée aux cellules.

La présente invention permet de résoudre de façon simple et efficace le problème précédemment énoncé.

La présente invention concerne un procédé de réglage de couleurs d'un panneau à plasma polychrome, comportant une pluralité de points élémentaires d'images, chaque point étant constitué par plusieurs zones recouvertes de luminophores de différentes couleurs, chacune de ces zones correspondant au croisement d'électrodes permettant en fonctionnement, d'appliquer à chaque zone des signaux de commande, et notamment un signal d'entretien, caractérisé en ce qu'il consiste à appliquer aux différentes zones de chaque point élémentaire d'image un signal d'entretien restectif à fréquence réglable, identique pour tous les luminophores de même type de tous les points d'image du panneau, et en ce que le réglage des couleurs du panneau se fait en réglant la fréquence des divers signaux d'entretien utilisés.

L'invention permet donc un réglage électronique des couleurs, qui peut être adapté à chaque panneau, même après sa fabrication. Le réglage des couleurs ainsi réalisé peut être très précis et éventuellement compléter un réglage réalisé de façon connue, par exemple en modifiant la géométrie et le nombre de zones recouvertes de luminophores.

D'autre objets, caractéristiques et résultats de l'invention ressortiront de la description suivante, donnée à titre d'exemple non limitatif et illustrée par les figures annexées qui représentent :

- la figure 1, une vue schématique en perspective d'un mode de réalisation d'un panneau à plasma de type alternatif selon l'art antérieur ;

- les figures 2 et 4, deux variantes montrant la constitution de quelques points élémentaire d'images dans le cas d'un panneau polychrome selon l'invention ;
- la figure 3, un diagramme des couleurs établi dans le mode de réalisation de l'invention représenté sur la figure 2.

Sur les différentes figures, le mêmes repères désignent les mêmes éléments, mais, pour des raisons de clarté, les cotes et proportions des divers éléments ne sont pas respectées.

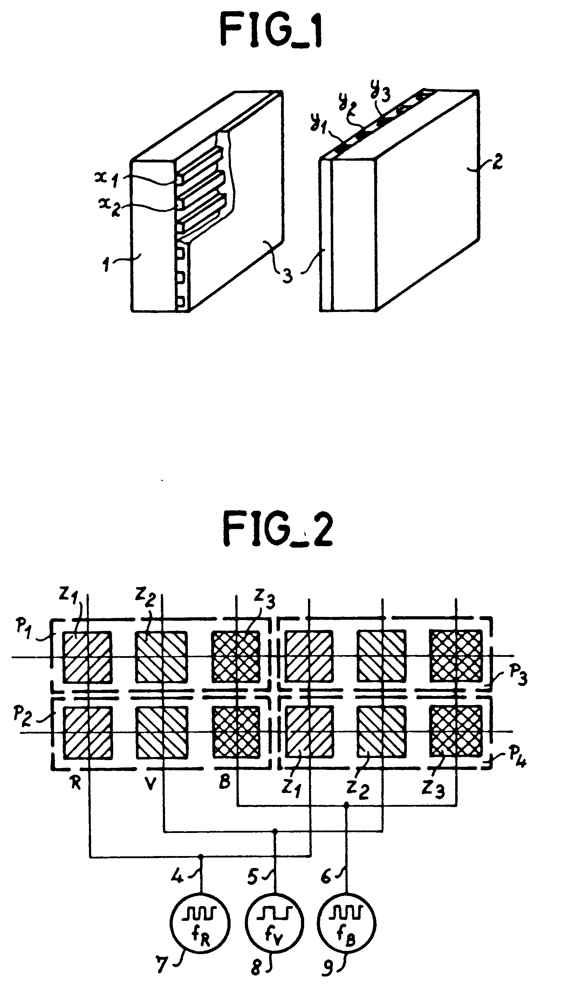

La figure 1 représente de façon schématique un mode de réalisation d'un panneau à plasma de type alternatif connu de l'art antérieur.

Ce panneau comporte deux dalles en verre 1 et 2 portant chacune un réseau d'électrodes parallèles entre elles, $x_1, x_2, x_3$..et $y_1$, $y_2$, $y_3$... qui sont recouvertes d'une couche diélectrique 3. Les deux dalles sont montées et scellées de façon que les deux réseaux d'électrodes soient perpendiculaires entre eux et qu'il existe une très faible distance entre les deux couches diélectriques en vis-à-vis 3. Cet espace entre les deux couches diélectriques est rempli d'un gaz, généralement à base de néon.

La figure 2 représente de façon schématique un exemple de constitution de quelques points élémentaires d'image pour un panneau polychrome commandé selon l'invention.

Sur la figure 2, on a représenté quatre points élémentaires d'images voisins :$P_1$, $P_2$, $P_3$, $P_4$. Pour des raisons de clarté chacun de ces points est délimité par un rectangle en trait discontinu. Comme il s'agit d'un panneau trichrome, chaque point élémentaire d'image comporte trois zones voisines $Z_1$, $Z_2$, $Z_3$,de petites dimensions et de forme carrée par exemple, chacune de ces zones étant recouverte d'un luminophore de couleur différente. Par exemple, il peut y avoir un luminophore de couleur rouge, un de couleur verte et un de couleur bleue. Chaque zone recouverte de luminophore correspond au croisement de deux électrodes perpendiculaires comme montré par la figure 1 chacune portée par l'une des dalles du panneau et recevant des signaux de commande propres à cette zone.

Sur la figure 2, l'intersection des deux électrodes liées à une zone recouverte d'un luminophore correspond sensiblement au point milieu du carré constituant cette zone.

Ces panneaux à plasma, sont de type alternatif. Du fait de la présence de la couche diélectrique 3 qui recouvre chaque réseau d'électrodes, ces panneaux présentent une mémoire interne. La commande de ces panneaux comporte, de façon bien connue, deux étapes :

- une étape d'adressage, au cours de laquelle il y a création de décharges sur certains points élémentaires d'image qui ont été sélectionnés;
- une étape d'entretien, au cours de laquelle la mémoire interne du panneau est utilisée pour générer entre deux adressages de façon répétitive de nouvelles décharges uniquement pour les points élémentaires d'image qui ont été précédemment adressés. Le signal d'entretien est un signal périodique, en forme de créneaux, et donc constitué par une alternance de tensions positives et négatives. A chaque changement de signe de la tension, il y a création d'une décharge électrique, et donc émission de lumière. En conséquence, la luminance du panneau est, en première approximation, proportionnelle à la fréquence du signal d'entretien.

L'invention utilise cette caractéristique et consiste à attribuer à chacun des différents types de luminophores utilisés dans le panneau une fréquence d'entretien particulière de réglable. Ainsi en modifiant cette fréquence d'entretien, on peut agir sur la luminance due à chaque type de luminophore et régler les couleurs du panneau à plasma : les trois luminophores rouge, vert et bleu qui recouvrent les trois zones constituant chaque point élémentaire d'image sont repérés par les références R, V, B et par des hachures ou un quadrillage restectifs.Ces électrodes verticales correspondant à des zones recouvertes de luminophores de même type sont interconnectées. On obtient ainsi trois connexions 4, 5 et 6, qui sont reliées de façon symbolique à trois générateurs 7, 8, 9 produisant des signaux d'entretien de fréquences différentes $f_R$, $f_V$, $f_B$. Les signaux d'entretien sont représentés dans des cercles symbolisant les générateurs. Ces générateurs ont des fréquences réglables.

En modifiant la fréquences des signaux d'entretien appliqués à chaque type de luminophores, on modifie la quantité de lumière due à chaque type de luminophore et on peut régler les couleurs composées du panneau, c'est-à-dire celles qui sont obtenues par excitation de plusieurs luminophores de types différents dans un point élémentaire d'image.

On peut donc régler les fréquences $f_R$, $f_V$, $f_B$ de manière continue. Dans ce cas, ces fréquences sont indépendantes entre elles.

On peut aussi régler ces fréquences, de manière discrète, selon des multiples entiers d'une fréquence de base $f_o$. Dans ce cas, les signaux d'entretien se retrouvent régulièrement dans le même état, avec une période égale à $1/f_o$.

Le réglage des rapports $f_R/f_o$, $f_V/f_o$ et $f_B/f_o$, se fait notamment, en fonction des caractéristiques colorimétriques des luminophores et de leurs rendements lumineux mesurés expérimentalement.

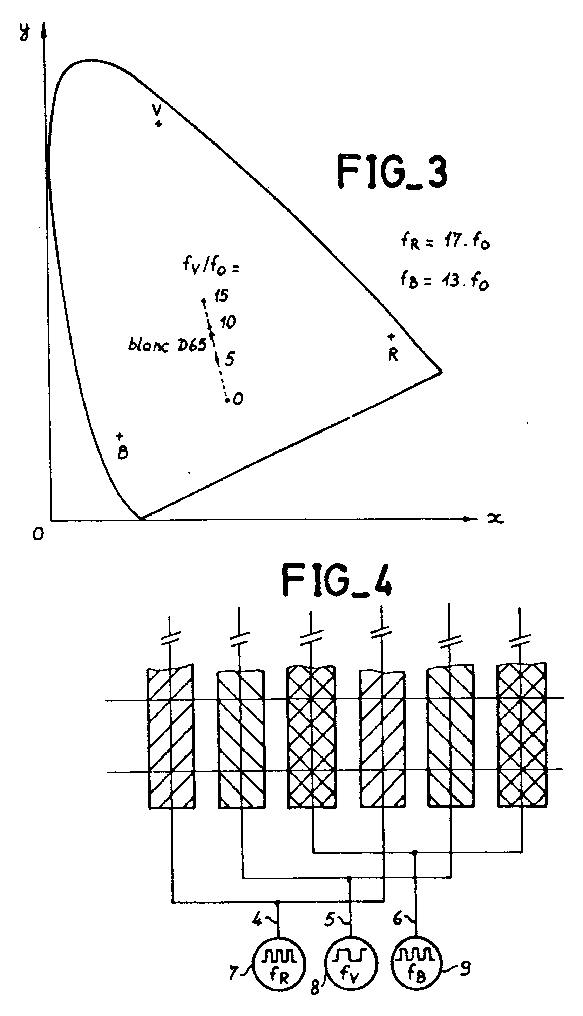

La figure 3 représente un diagramme des couleurs établi conformément aux normes du CIE 1960. Ce diagramme a été établi pour le cas où l'on utilise trois luminophores différents de couleurs rouge, vert, bleu par point élémentaire.

Les résultats sont donnés pour les luminophores suivants, présentant le même rendement énergétique :
- pour le rouge, un luminophore de formule ($YVO_4$ : Eu), conforme aux spécifications du JEDEC P 22 R ;
- pour le vert, un luminophore de formule($Zn Si O_4$: Mn), conforme aux spécifications du JEDEC P1 ;
- pour le bleu, un luminophore de formule $Zn_S$: Ag, conforme aux spécifications du JEDEC P 11.

Dans le diagramme de la figure 3, les couleurs visibles sont contenues à l'intérieur d'une figure géométrique sensiblement triangulaire. Ce diagramme est établi en utilisant les coordonnées de couleur normalisées x et y. Les lettres R, V, B indiquent les trois couleurs de base rouge, vert, bleu utilisées.

Les fréquences d'entretien $f_R$, $f_V$, $f_B$ des zones recouvertes de luminophore de couleur rouge, verte et bleue peuvent varier de manière discrète, selon des multiples entiers d'une fréquence de base $f_o$, comme indiqué ci-dessus.

La figure 3 montre ce qui se passe avec $f_R$ = 17 $f_o$, $f_B$ = 13 $f_o$, et le rapport $f_V/f_o$, variable de 0 à 15 en conservant des valeurs entières, et en cherchant à obtenir par combinaison des trois couleurs de base rouge, vert, bleu, un blanc quasi-parfait.

Lorsque le rapport $f_V/f_o$ est égal à 9, on obtient un blanc quasi-parfait, très proche du blanc $D_{65}$, qui correspond à une température de couleur de 6500K.

Si $f_o$ = 4KHz, les fréquences d'entretien suivantes doivent alors être appliquées aux trois luminophores du panneau pour obtenir ce blanc quasi parfait:

$f_R$ = 68 KHz
$f_V$ = 36 KHz
$f_B$ = 52 KHz

La séquence d'entretien se reproduit identique à elle-même avec une période égale à 1/$f_o$, soit 250 microsecondes.

L'invention permet un équilibrage des couleurs qui peut être très fin et peut s'effectuer dans une large plage de réglage.

Cet équilibrage présente l'avantage de pouvoir être effectué une fois le panneau terminé, sans qu'il soit nécessaire de modifier sa structure et alors que l'on peut constater expérimentalement quelles sont les caractéristiques lumineuses du panneau.

Cet équilibrage peut être utilisé en complément des solutions déjà connues pour l'équilibage des couleurs, et telles que la géométrie des zones recouvertes de luminophores et leur nombre à l'intérieur de chaque point élémentaire d'image.

La figure 4 représente un mode de réalisation de l'invention qui diffère du mode de réalisation de la figure 2 seulement par la forme des luminophores, déposés selon des bandes continues qui recouvrent plusieurs points élémentaires d'image. Ce mode de réalisation de la figure 4 est de fabrication plus facile que celui décrit en référence à la figure 2 et le fait que les luminophores soient déposés selon des bandes continues n'entraîne pas d'inconvénients en ce qui concerne le fonctionnement du panneau.

L'invention s'applique à tous les panneaux à plasma à mémoire.

En particulier, dans le cas des panneaux à plasma de type alternatif, l'invention s'applique quelle que soit la structure de ces panneaux, qu'il s'agisse d'une structure classique comme celle illustrée par la figure 1, ou d'autres structures telle que, par exemple, celle décrite dans la demande de brevet international WO 83/03497 où toutes les électrodes sont portées par la même dalle de verre, ou, par exemple, celle décrite dans le brevet européen 0.135.382 où les signaux d'entretien sont appliqués à des électrodes parallèles.

L'invention s'applique aussi aux panneaux à plasma de type continu mais seulement s'ils disposent à un niveau ou à un autre d'une mémoire pour l'entretien. Ces panneaux diffèrent des panneaux à plasma de type alternatif par ce qu'ils ne comportent pas de couche diélectrique 3, séparant les électrodes du gaz. Certains panneaux ne possèdent pas de mémoire interne mais peuvent être associés à une mémoire externe au panneau proprement dit, mais interne au module d'affichage.

L'invention s'applique d'une manière générale aux panneaux à plasma nécessitant un entretien, plusieurs milliers de fois par seconde, appliqué à tous les points du panneau simultanément ou à tout un ensemble de points en parallèle.

Enfin, l'invention s'applique à tous les panneaux polychromes, qu'ils utilisent deux, trois ou plus de trois luminophores de couleurs différentes par point élémentaire.

## Revendications

1. Procédé de réglage des couleurs d'un panneau à plasma polychrome, comportant une pluralité de points élémentaires d'images ($P_1$, $P_2$, $P_3$, $P_4$), chaque point étant constitué par plusieurs zones ($Z_1$, $Z_2$, $Z_3$), recouvertes de luminophores de différentes couleurs, chacune de ces zones correspondant au croisement d'électrodes permettant en fonctionnement, d'appliquer, à chaque zone des signaux de commande, et notamment un signal d'entretien, caractérisé en ce qu'il consiste à appliquer aux zones différentes ($Z_1$, $Z_2$, $Z_3$) de chaque point élémentaire d'image un signal d'entretien respectif à fréquence réglable, identique pour tous les luminophores de même type de tous les points d'image du panneau, et en ce que le réglage des couleurs du panneau se fait en réglant la fréquence des divers signaux d'entretien utilisés.

2. Procédé selon la revendication 1, caractérisé en ce que la fréquence des signaux d'entretien ($f_R$, $f_V$, $f_B$) est réglable de manière continue.

3. Procédé selon la revendication 1, caractérisé en ce que la fréquence des signaux d'entretien ($f_R$, $f_V$, $f_B$) est réglable de manière discrète, selon des multiples entiers d'une fréquence de base ($f_O$).

4. Panneau à plasma polychrome pour la mise en oeuvre du procédé selon la revendication 1, comportant une pluralité de points élémentaires d'images ($P_1$, $P_2$, $P_3$, $P_4$), chaque point étant constitué par plusieurs zones, ($Z_1$, $Z_2$, $Z_3$) recouvertes de luminophores de différentes couleurs, chacune de ces zones correspondant au croisement d'électrodes permettant en fonctionnement d'appliquer à chaque zone des signaux de commande, et notamment un signal d'entretien, caractérisé en ce que les luminophores de même type de tous les points d'image du panneau sont commandés par un signal d'entretien respectif à fréquence réglable, les électrodes correspondant à chaque type de luminophores étant interconnectées (4,5,6) et reliées à un générateur à fréquence réglable (7,8,9).

5. Panneau selon la revendication 4, caractérisé en ce qu'il s'agit d'un panneau de type alternatif.

6. Panneau selon la revendication 4, caractérisé en ce qu'il s'agit d'un panneau de type continu associé à une mémoire.

## Claims

1. Method for adjusting the colours of a polychromatic plasma panel, comprising a plurality of picture elements ($P_1$, $P_2$, $P_3$, $P_4$), each element consisting of several zones ($Z_1$, $Z_2$, $Z_3$) covered with luminophores of different colours, each of these zones corresponding to the crossing of electrodes making it possible during operation to apply control signals, and in particular a maintaining signal, to each zone, characterised in that it consists of applying, to the different zones ($Z_1$, $Z_2$, $Z_3$) of each picture element, a respective variable-frequency maintaining signal which is identical for all luminophores of the same type of all the picture elements of the panel, and in that adjustment of the colours of the panel is carried out by adjusting the frequency of the various maintaining signals used.

2. Method according to claim 1, characterised in that the frequency of the maintaining signals ($f_R$, $f_V$, $f_B$) is adjustable continuously.

3. Method according to claim 1, characterised in that the frequency of the maintaining signals ($f_R$, $f_V$, $f_B$) is adjustable discontinuously, according to the integral multiples of a base frequency ($f_O$).

4. Polychromatic plasma panel for carrying out the method according to claim 1, comprising a plurality of picture elements ($P_1$, $P_2$, $P_3$, $P_4$), each element consisting of several zones ($Z_1$, $Z_2$, $Z_3$) covered with luminophores of different colours, each of these zones corresponding to the crossing of electrodes making it possible during operation to apply control signals, and in particular a maintaining signal, to each zone, characterised in that the luminophores of the same type of all the picture elements of the panel are controlled by a respective variable-frequency maintaining signal, the electrodes corresponding to each type of luminophore being interconnected (4, 5, 6) and connected to a variable-frequency generator (7, 8, 9).

5. Panel according to claim 4, characterised in that it is a panel of the varying type.

6. Panel according to claim 4, characterised in that it is a panel of the continuous type associated with a memory.

## Patentansprüche

1. Verfahren zur Einstellung der Farben einer mehrfarbigen Plasmaanzeigetafel, die eine Anzahl von elementaren Bildpunkten ($P_1$, $P_2$, $P_3$, $P_4$) aufweist, wobei jeder Punkt von mehreren mit verschiedenfarbigen Leuchtstoffen bedeckten Zonen ($Z_1$, $Z_2$, $Z_3$) gebildet ist, von denen jede einem Kreuzungspunkt von Elektroden entspricht, die das Zuführen von Steuersignalen und insbesondere von einem Aufrechterhaltungssignal zu jeder Zone während des Betriebs ermöglichen, dadurch gekennzeichnet, daß an die verschiedenen Zonen ($Z_1$, $Z_2$, $Z_3$) eines jeden elementaren Bildpunkts jeweils ein Aufrechterhaltungssignal von einstellbarer, für alle Leuchtstoffe desselben Typs von allen Bildpunkten der Anzeigetafel identischer Frequenz angelegt wird, und daß die Einstellung der Farben der Anzeigetafel durch Einstellen der Frequenz der verschiedenen verwendeten Aufrechterhaltungssignale erfolgt.

2. Verfahren nach Anspruch 1, dadurch gekennzeichnet, daß die Frequenz ($f_R$, $f_V$, $f_B$) der Aufrechterhaltungssignale kontinuierlich einstellbar ist.

3. Verfahren nach Anspruch 1, dadurch gekennzeichnet, daß die Fequenz ($f_R$, $f_V$, $f_B$) der Aufrechterhaltungssignale in ganzzahligen Vielfachen einer Grundfrequenz ($f_O$) diskret einstellbar ist.

4. Mehrfarbige Plasmaanzeigetafel zum Ausführen des Verfahrens nach Anspruch 1, die eine Anzahl von elementaren Bildpunkten ($P_1$, $P_2$, $P_3$, $P_4$) aufweist, wobei jeder Punkt von mehreren mit verschiedenfarbigen Leuchtstoffen bedeckten Zonen ($Z_1$, $Z_2$, $Z_3$) gebildet ist, von denen jede einem Kreuzungspunkt von Elektroden entspricht, die das Zuführen von Steuersignalen und insbesondere von einem Aufrechterhaltungssignal zu jeder Zone während des Betriebs ermöglichen, dadurch gekennzeichnet, daß die Leuchtstoffe desselben Typs von allen elementaren Bildpunkten der Anzeigetafel jeweils durch ein Aufrechterhaltungssignal von einstellbarer Frequenz gesteuert werden, wobei die einem jeden Typ von Leuchtstoffen entsprechenden Elektroden (4, 5, 6) miteinander verbunden und an einen Frequenzgenerator (7, 8, 9) mit einstellbarer Frequenz angeschlossen sind.

5. Anzeigetafel nach Anspruch 4, dadurch gekennzeichnet, daß es sich um eine Anzeigetafel des wechselspannungsbetriebenen Typs handelt.

6. Anzeigetafel nach Anspruch 4, dadurch gekennzeichnet, daß es sich um eine Anzeigetafel des gleichspannungsbetriebenen Typs handelt, die einem Speicher zugeordnet ist.

# FIG_1

# FIG_2

# FIG_3

$f_R = 17 . f_0$

$f_B = 13 . f_0$

$f_V / f_0 =$

15
10
5
0

blanc D65

# FIG_4